# EUROPÄISCHE PATENTANMELDUNG

(11) **EP 4 173 463 A1**
(43) Veröffentlichungstag der Anmeldung: **03.05.2023**
(21) Anmeldenummer: 22401027.2
(22) Anmeldetag: 17.10.2022
(51) Int. Cl.: A01C 7/08, A01C 7/06

(54) **MATERIALVERTEILSYSTEM FÜR EINE LANDWIRTSCHAFTLICHE AUSBRINGMASCHINE**

(30) Priorität: 26.10.2021 DE 102021127729
(71) Anmelder: Amazonen-Werke H. Dreyer SE & Co. KG, 49205 Hasbergen (DE)
(72) Erfinder: Bruns, Helmut, 27804 Berne (DE); Flucke, Jan, 27798 Hude (DE); Wien, Thomas, 28816 Stuhr (DE)

(57) **Zusammenfassung**

Die Erfindung betrifft ein Materialverteilsystem (10) für eine landwirtschaftliche Ausbringmaschine, mit drei Verteileinheiten (22a-22c), welche jeweils einen Materialeinlass und mehrere Materialauslässe umfassen, und drei Zuführleitungen (16a-16c), wobei jede der Zuführleitungen (16a-16c) jeweils mit einem Materialeinlass einer Verteileinheit (22a-22c) verbunden ist.

## Beschreibung

Die Erfindung betrifft ein Materialverteilsystem für eine landwirtschaftliche Ausbringmaschine nach dem Oberbegriff des Patentanspruchs 1 und eine landwirtschaftliche Ausbringmaschine nach dem Oberbegriff des Patentanspruchs 13.

Materialverteilsysteme von universell einsetzbaren landwirtschaftlichen Ausbringmaschinen können mehrere separate Verteileinheiten zum Verteilen des auszubringenden Materials aufweisen. Die jeweiligen Verteileinheiten dienen dabei zum Verteilen des auszubringenden Materials von einer mit einem Materialeinlass der Verteileinheit verbundenen Zuführleitung auf mehrere mit Materialauslässen der Verteileinheit verbundenen Ausbringleitungen.

Aufgrund der mehreren Verteileinheiten können mit derartigen landwirtschaftlichen Ausbringmaschinen unterschiedliche Materialien, beispielsweise Saatgut und Dünger oder verschiedene Saatgut- oder Düngersorten, gleichzeitig ausgebracht werden. Ferner hat der Maschinenbediener die Möglichkeit für ein spezifisches auszubringendes Material, beispielsweise einem spezifischen Saatgut oder einem spezifischen Dünger, einen geeigneten Verteil- und Ausbringpfad der landwirtschaftlichen Ausbringmaschine zu wählen, beispielsweise unter Berücksichtigung der aktuellen Bodenverhältnisse.

Gattungsgemäße Materialverteilsysteme sind aus den Druckschriften US 2019/0346302 A1 und EP 3 150 041 A1 bekannt.

Die Einsatzmöglichkeiten dieser und anderer aus dem Stand der Technik bekannten Materialverteilsysteme sind jedoch insofern eingeschränkt, dass spezifische Ausbringsituationen nicht oder nur eingeschränkt umsetzbar sind.

Die der Erfindung zugrundeliegende Aufgabe besteht somit darin, die Einsatzmöglichkeiten einer landwirtschaftlichen Ausbringmaschine mit einem mehrere Verteileinheiten aufweisenden Materialverteilsystem zu erweitern.

Die Aufgabe wird gelöst durch ein Materialverteilsystem der eingangs genannten Art, wobei das erfindungsgemäße Materialverteilsystem drei Einspeisevorrichtungen aufweist, über welche jeweils ein auszubringendes Material in bis zu zwei Zuführleitungen einspeisbar ist.

Mittels der drei Einspeisevorrichtungen kann jeweils ein Material wahlweise in eine Zuführleitung oder in zwei Zuführleitungen des Materialverteilsystems eingespeist werden. Zur Vermeidung einer unnötig hohen Systemkomplexität eignen sich die jeweiligen Einspeisevorrichtungen nicht zum Einspeisen des jeweiligen auszubringenden Materials in mehr als zwei Zuführleitungen.

Die Zuführleitungen des Materialverteilsystems sind vorzugsweise nebeneinander angeordnet. Ferner sind die Zuführleitungen vorzugsweise zumindest abschnittsweise in einer gemeinsamen horizontalen Zuführebene angeordnet. Insbesondere, wenn lediglich ein flacher Bauraum für die Zuführleitungen zur Verfügung steht oder ein hoher Maschinenaufbau vermieden werden soll, ist die Anordnung der Zuführleitungen nebeneinander in einer gemeinsamen horizontalen Zuführebene vorteilhaft.

In einer bevorzugten Ausführungsform des erfindungsgemäßen Materialverteilsystems ist eine Verteileinheit als Hauptverteileinheit ausgebildet, wobei zwei Verteileinheiten jeweils als Nebenverteileinheit ausgebildet sind. Die Hauptverteileinheit weist vorzugsweise eine höhere Anzahl an Materialauslässen auf als die Nebenverteileinheiten. An die Hauptverteileinheit kann somit eine höhere Anzahl an Ausbringleitungen angeschlossen werden als an die Nebenverteileinheiten. Die Hauptverteileinheit kann beispielsweise 54 bis 72 Materialauslässe aufweisen. Die Nebenverteileinheiten können beispielsweise 27 bis 54 Materialauslässe aufweisen. Mit den Nebenverteileinheiten kann beispielsweise Schneckenkorn oder Untersaat verteilt werden.

Das erfindungsgemäße Materialverteilsystem wird ferner dadurch vorteilhaft weitergebildet, dass der durchschnittliche Förderquerschnitt der mit dem Materialeinlass der Hauptverteileinheit verbundenen Zuführleitung größer ist als die durchschnittlichen Förderquerschnitte der mit den Materialeinlässen der Nebenverteileinheiten verbundenen Zuführleitungen. Bei konstantem Leitungsquerschnitt entspricht der durchschnittliche Förderquerschnitt dem Leitungsquerschnitt. Der durchschnittliche Förderquerschnitt der mit dem Materialeinlass der Hauptverteileinheit verbundenen Zuführleitung kann im Bereich von 160 mm bis 200 mm liegen. Der durchschnittliche Förderquerschnitt der mit dem Materialeinlass der Nebenverteileinheiten verbundenen Zuführleitungen kann im Bereich von 120 mm bis 160 mm liegen.

In einer anderen bevorzugten Ausführungsform des erfindungsgemäßen Materialverteilsystems ist über die drei Einspeisevorrichtungen jeweils Material in die mit dem Materialeinlass der Hauptverteileinheit verbundenen Zuführleitungen einspeisbar. Ferner ist über die drei Einspeisevorrichtungen jeweils Material in eine mit dem Materialeinlass einer Nebenverteileinheit verbundenen Zuführleitung einspeisbar. Mit jeder Einspeisevorrichtung lässt sich also Material in die mit dem Materialeinlass der Hauptverteileinrichtung verbundenen Zuführleitung einspeisen. Darüber hinaus lässt sich mit den Einspeisevorrichtungen Material entweder in eine mit dem Materialeinlass einer ersten Nebenverteileinrichtung verbundenen Zuführleitung oder Material in eine mit dem Materialeinlass einer zweiten Nebenverteileinrichtung verbundenen Zuführleitung einspeisen.

In einer weiteren bevorzugten Ausführungsform weist das erfindungsgemäße Materialverteilsystem einen Strömungserzeuger auf, welcher mit den drei Zuführleitungen verbunden und dazu eingerichtet ist, eine Förderluftströmung in den Zuführleitungen zu erzeugen. Der Strömungserzeuger kann beispielsweise ein Gebläse sein. Dadurch, dass der Strömungserzeuger zum Erzeugen einer Luftströmung in den drei Zuführleitungen einsetzbar ist, kann auf mehrere zuführleitungseigene Strömungserzeuger verzichtet werden.

Es ist ferner ein erfindungsgemäßes Materialverteilsystem vorteilhaft, bei welchem der Strömungserzeuger über drei Luftförderleitungen mit den Einspeisevorrichtungen verbunden ist, wobei die Luftförderleitungen vorzugsweise überstimmende Luftförderquerschnitte aufweisen. Die Einspeisevorrichtungen sind also im Übergangsbereich zwischen den mit dem Strömungserzeuger verbundenen Luftförderleitungen und den mit den Materialeinlässen der Verteileinheiten verbundenen Zuführleitungen positioniert. Eine Querschnittsänderung entlang des Leitungspfads aus Luftförderleitung und Zuführleitung ergibt sich vorzugsweise erst in Strömungsrichtung hinter den Einspeisevorrichtungen.

In einer anderen bevorzugten Ausführungsform des erfindungsgemäßen Materialverteilsystems sind mehrere oder sämtliche Materialauslässe der Verteileinheiten mit Ausbringleitungen verbunden, wobei eine, mehrere oder sämtliche Verteileinheiten vorzugsweise steuerbare Sperrkörper aufweisen, mittels welchen die Einleitung des auszubringenden Materials in die Ausbringleitungen unterbrochen werden kann. Die Sperrkörper können beispielsweise bewegliche Klappen oder Wippen sein, mit welchen ein Durchgang zu den Ausbringleitungen gesperrt und freigegeben werden kann. Die Sperrkörper sind vorzugsweise jeweils einer Ausbringleitung bzw. einem Materialauslass zugeordnet und können unabhängig voneinander gesteuert werden. Die Sperrkörper können mit einem Antrieb, beispielsweise einem elektromotorischen Antrieb, gekoppelt sein, über welche die Sperrkörper zwischen einer Sperrstellung und einer Freigabestellung bewegbar sind.

In einer weiteren bevorzugten Ausführungsform des erfindungsgemäßen Materialverteilsystems weisen eine, mehrere oder sämtliche Verteileinheiten Materialrückführungen auf, über welche Material aus der jeweiligen Verteileinheit in die mit der Verteileinheit verbundene Zuführleitung rückführbar ist. Die Materialrückführungen umfassen vorzugsweise eine Rückführleitung, in welche das nicht in die Ausbringleitung eingeleitete Material zum Zwecke der Rückführung in die Zuführleitung eingeleitet wird. Eine Materialrückführung erfolgt beispielsweise, wenn ein Sperrkörper, welcher einer Ausbringleitung bzw. einem Materialauslass zugeordnet ist, sich in der Sperrstellung befindet, sodass die Einleitung des Materials in die Ausbringleitung verhindert wird. Die Verteileinheiten können ferner mit einer Luftausleitung ausgestattet sein, über welche bei gesperrter Ausbringleitung weiterhin Luft durch die Ausbringleitungen abgeführt wird, sodass bei einer Materialrückführung in die jeweilige Zuführleitung zwar das gesamte Material, jedoch eine verringerte Menge an Luft zurückgeführt wird. Die Luftausleitung kann beispielsweise über eine Bypass-Leitung erfolgen, über welche Luft aus einer Materialrückführung wieder in die jeweilige Ausbringleitung eingeleitet werden kann.

In einer vorteilhaften Weiterbildung weist das erfindungsgemäße Materialverteilsystem zumindest drei Vorratsbehälter für auszubringendes Material auf, wobei jeder Vorratsbehälter mit einer Einspeisevorrichtungen verbunden ist. Die Vorratsbehälter sind vorzugsweise oberhalb der Einspeisevorrichtungen, mit welcher der jeweilige Vorratsbehälter verbunden ist, positioniert. Das in den jeweiligen Vorratsbehältern bevorratete Material fällt vorzugsweise aufgrund von Schwerkrafteinwirkung in die jeweilige Einspeisevorrichtung. Ein Vorratsbehälter, mehrere oder sämtliche Vorratsbehälter können sich auf der landwirtschaftlichen Ausbringmaschine befinden, auf welcher auch die Verteileinheiten angeordnet sind. Ein Vorratsbehälter, mehrere oder sämtliche Vorratsbehälter können sich auch auf einem separaten Materialtransportfahrzeug oder einem Materialtransportwagen befinden. Die landwirtschaftlichen Ausbringmaschine und das Materialtransportfahrzeug oder der Materialtransportwagen können miteinander verbunden sein und einen gemeinsamen Fahrzeugverbund bilden.

In einer Weiterbildung des erfindungsgemäßen Materialverteilsystems sind die Materialauslässe einer ersten Verteileinheit mit Ablageeinrichtungen eines ersten Typs verbunden. Die Ablageeinrichtungen des ersten Typs können beispielsweise Saatgutablageeinrichtungen sein. Die Saatgutablageeinrichtung können beispielsweise Säschare sein. Die Ablageeinrichtungen des ersten Typs können auch zum Ausbringen von Dünger geeignet sein. Die erste Verteileinheit, deren Materialauslässe mit den Ablageeinrichtungen des ersten Typs verbunden sind, ist vorzugsweise die Hauptverteileinheit.

Es ist darüber hinaus ein erfindungsgemäßes Materialverteilsystem vorteilhaft, bei welchem die Materialauslässe einer zweiten Verteileinheit mit Ablageeinrichtungen eines zweiten Typs verbunden sind. Die Ablageeinrichtungen des zweiten Typs können Düngerablageeinrichtungen sein. Die Düngerablageeinrichtungen können Düngeschare sein. Die Ablageeinrichtungen des zweiten Typs können auch zur Ablage von Saatgut geeignet sein. Die zweite Verteileinheit, deren Materialauslässe mit den Ablageeinrichtungen des zweiten Typs verbunden sind, ist vorzugsweise eine Nebenverteileinheit.

Die Ablageeinrichtungen des ersten Typs können für die Ablage von Material in einer ersten Ablagetiefe eingerichtet sein. Die Ablageeinrichtungen des zweiten Typs können für die Ablage von Material in einer zweiten Ablagetiefe eingerichtet sein. Die erste und die zweite Ablagetiefe unterscheiden sich vorzugsweise voneinander. Der Maschinenbediener kann also beispielsweise in Abhängigkeit des aktuellen Bodenzustands oder der Anforderungen des abzulegenden Materials wählen, ob das auszubringende Material über die Ablageeinrichtungen des ersten Typs oder über die Ablageeinrichtungen des zweiten Typs auf der landwirtschaftlichen Nutzfläche abgelegt wird.

In einer anderen bevorzugten Ausführungsform des erfindungsgemäßen Materialverteilsystems sind die Materialauslässe einer dritten Verteileinheit mit Prallteller-Abwurfeinrichtungen verbunden. Alternativ sind die Materialauslässe einer dritten Verteileinheit mit den Ablageeinrichtungen des ersten Typs verbunden, mit welchen auch die Materialauslässe der ersten Verteileinheit verbunden sind. Die dritte Verteileinheit kann beispielsweise eine Nebenverteileinheit sein. Die Prallteller-Abwurfeinrichtungen können Saatgut-Prallteller aufweisen. Die Prallteller-Abwurfeinrichtungen können auch zum Abwerfen von Dünger auf die landwirtschaftliche Nutzfläche geeignet sein. Wenn das Materialverteilsystem Ablageeinrichtungen eines ersten Typs, Ablageeinrichtungen eines zweiten Typs und Prallteller-Abwurfeinrichtungen aufweist, ermöglicht das Materialverteilsystem die Materialausbringung in unterschiedlichen Ausbringtiefen. Über die Ablageeinrichtungen des ersten Typs kann Material in einer ersten Ablagetiefe in dem Boden der landwirtschaftlichen Nutzfläche gelegt werden. Über die Ablageeinrichtungen des zweiten Typs kann Material in einer zweiten Ablagetiefe in dem Boden der landwirtschaftlichen Nutzfläche gelegt werden. Über die Prallteller-Abwurfeinrichtungen kann Material auf die Bodenoberfläche der landwirtschaftlichen Nutzfläche geworfen werden.

Die der Erfindung zugrundeliegende Aufgabe wird ferner durch eine landwirtschaftliche Ausbringmaschine der eingangs genannten Art gelöst, wobei das Materialverteilsystem der erfindungsgemäßen landwirtschaftlichen Ausbringmaschine nach einer der vorstehend beschriebenen Ausführungsform ausgebildet ist. Hinsichtlich der Vorteile und Modifikationen der erfindungsgemäßen landwirtschaftlichen Ausbringmaschine wird zunächst auf die Vorteile und Modifikationen des erfindungsgemäßen Materialverteilsystems verwiesen.

In einer bevorzugten Ausführungsform weist die erfindungsgemäße landwirtschaftliche Ausbringmaschine eine Rückverfestigungseinheit zur Bodenrückverfestigung auf. Die Ablageeinrichtungen des ersten Typs sind vorzugsweise innerhalb eines sich in Fahrtrichtung hinter der Rückverfestigungseinheit befindenden Ablagebereichs der Ausbringmaschine angeordnet. Alternativ oder zusätzlich sind die Ablageeinrichtungen des zweiten Typs innerhalb eines sich in Fahrtrichtung vor der Rückverfestigungseinheit befindenden Ablagebereichs der Ausbringmaschine angeordnet. Die Rückverfestigungseinheit kann beispielsweise als Reifenpacker ausgebildet sein. Die Rückverfestigungseinheit dient neben der Bodenrückverfestigung auch der Tiefenführung der Ausbringmaschine. Der Maschinenbediener kann somit unter Berücksichtigung der Bodenverhältnisse, beispielsweise unter Berücksichtigung der Bodenfeuchtigkeit, insbesondere der Nässe bzw. Trockenheit, wählen, ob das auszubringende Material, beispielsweise Dünger oder Saatgut, in dem in Fahrtrichtung vor der Rückverfestigungseinheit befindenden Ablagebereich oder in dem in Fahrtrichtung hinter der Rückverfestigungseinheit befindenden Ablagebereich abgelegt wird. Bei Nässe kann das Saatgut beispielsweise hinter dem Reifenpacker ausgebracht werden, damit die Pflanzen nicht durch einen verdichteten Bodenhorizont wachsen müssen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel des erfindungsgemäßen Materialverteilsystems in einer schematischen Darstellung;
- Fig. 2: eine Einspeisevorrichtung des in der Fig. 1 abgebildeten Materialverteilsystems in einer schematischen Schnittdarstellung; und
- Fig. 3: Teile eines erfindungsgemäßen Materialverteilsystems in einer schematischen Darstellung.

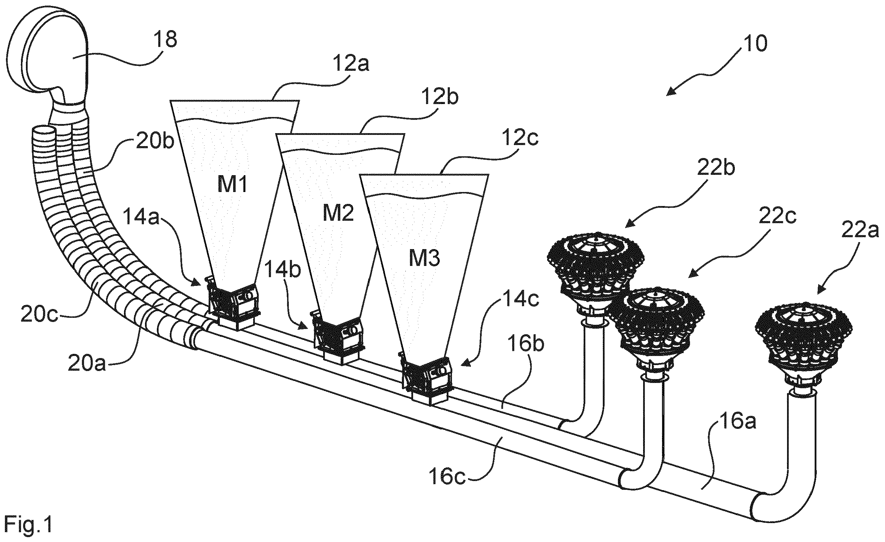

Die Fig. 1 zeigt ein Materialverteilsystem 10 für eine landwirtschaftliche Ausbringmaschine, mit welcher drei Materialien M1-M3 auf eine landwirtschaftliche Nutzfläche ausgebracht werden können. Die Materialien M1-M3 können beispielsweise granularer bzw. körniger Dünger oder körniges Saatgut sein. Die Materialien M1-M3 werden in Vorratsbehältern 12a-12c des Materialverteilsystems bevorratet.

Der Vorratsbehälter 12a, in welchem das Material M1 bevorratet wird, ist mit der Einspeisevorrichtung 14a verbunden. Der Vorratsbehälter 12b, in welchem das Material M2 bevorratet wird, ist mit der Einspeisevorrichtung 14b verbunden. Der Vorratsbehälter 12c, in welchem das Material M3 bevorratet wird, ist mit der Einspeisevorrichtung 14c verbunden. Die Vorratsbehälter 12a-12c sind oberhalb der Einspeisevorrichtungen 14a-14c angeordnet, sodass das bevorratete Material M1-M3 aufgrund von Schwerkrafteinwirkung in die jeweilige Einspeisevorrichtung 14a-14c fällt.

Bei dem dargestellten Materialverteilsystem befinden sich die Vorratsbehälter 12a-12c auf der landwirtschaftlichen Ausbringmaschine, mit welcher auch die Materialablage bzw. der Materialabwurf umgesetzt wird. In anderen Ausführungsformen können ein Vorratsbehälter, mehrere oder sämtliche Vorratsbehälter auch auf einem separaten Materialtransportfahrzeug oder einem separaten Materialtransportwagen positioniert sein, wobei in diesem Fall die landwirtschaftliche Ausbringmaschine und das Materialtransportfahrzeug oder der Materialtransportwagen miteinander verbunden sind und einen gemeinsamen Fahrzeugverbund bilden.

Über die jeweiligen Einspeisevorrichtungen 14a-14c ist ein auszubringendes Material M1-M3 in bis zu zwei Zuführleitungen 16a-16c einspeisbar.

Mittels der ersten Einspeisevorrichtung 14a ist das Material M1 in die Zuführleitungen 16a, 16b einspeisbar. Dabei kann das Material M1 gleichzeitig in beide Zuführleitungen 16a, 16b oder alternativ nur in eine der Zuführleitungen 16a, 16b über die Einspeisevorrichtung 14a eingespeist werden.

Mittels der Einspeisevorrichtung 14b ist das Material M2 in die Zuführleitungen 16a, 16b einspeisbar. Dabei kann das Material M2 entweder in beide Zuführleitungen 16a, 16b gleichzeitig oder nur in eine der Zuführleitungen 16a, 16b über die Einspeisevorrichtung 14b eingespeist werden.

Mittels der Einspeisevorrichtung 14c ist das Material M3 in die Zuführleitungen 16a, 16c einspeisbar. Dabei kann das Material M3 entweder in beide Zuführleitungen 16a, 16c gleichzeitig oder nur in eine der Zuführleitungen 16a, 16c über die Einspeisevorrichtung 14c eingespeist werden.

Die Zuführleitungen 16a-16c sind nebeneinander angeordnet und befinden sich in einer gemeinsamen horizontalen Zuführebene.

Das Materialverteilsystem 10 weist ferner einen als Gebläse ausgebildeten Strömungserzeuger 18 auf. Der Strömungserzeuger 18 ist über die Förderluftleitungen 20a-20c mit den Zuführleitungen 16a-16c verbunden. Der Strömungserzeuger 18 ist dazu eingerichtet, eine Luftströmung in den drei Zuführleitungen 16a-16c zu erzeugen. Die Luftförderleitungen 20a-20c weisen übereinstimmende Luftförderquerschnitte auf.

Die Zuführleitung 16a ist mit dem Materialeinlass einer Verteileinheit 22a verbunden. Die Zuführleitung 16b ist mit dem Materialeinlass einer Verteileinheit 22b verbunden. Die Zuführleitung 16c ist mit dem Materialeinlass einer Verteileinheit 22c verbunden. Die Verteileinheiten 22a-22c weisen jeweils einen Materialeinlass und jeweils mehrere Materialauslässe auf und sind dazu eingerichtet, das über den Materialeinlass einströmende Material M1-M3 auf die Materialauslässe aufzuteilen. Die Verteileinheiten 22a-22c sind als Verteilerköpfe ausgebildet, wobei die Materialauslässe entlang des Umfangs der jeweiligen Verteileinheit 22a-22c angeordnet sind.

Die Verteileinheit 22a ist als Hauptverteileinheit ausgebildet, wobei die Verteileinheiten 22b, 22c jeweils als Nebenverteileinheit ausgebildet sind. Die Hauptverteileinheit 22a weist eine höhere Anzahl von Materialauslässen auf als die Nebenverteileinheiten 22b, 22c. Die Hauptverteileinheit 22a kann beispielsweise 54 Materialauslässe aufweisen. Die Nebenverteileinheiten 22b, 22c können beispielsweise jeweils 27 Materialauslässe aufweisen. Der durchschnittliche Förderquerschnitt der mit dem Materialeinlass der Hauptverteileinheit 22a verbundenen Zuführleitung 16a ist größer als die durchschnittlichen Förderquerschnitte der mit den Materialeinlässen der Nebenverteileinheiten 22b, 22c verbundenen Zuführleitungen 16b, 16c.

Je nach Betriebszustand der Einspeisevorrichtungen 14a-14c kann in die Verteileinheit 22a Material M1 und/oder Material M2 und/oder Material M3 eingeleitet werden. Je nach Betriebszustand der Einspeisevorrichtungen 14a, 14b kann in die Verteileinheit 22b das Material M1 und/oder das Material M2 eingeleitet werden. In die Verteileinheit 22c kann nur das Material M3 eingeleitet werden.

Die Materialauslässe der Verteileinheiten 22a-22c sind mit nicht dargestellten Ausbringleitungen verbunden, welche zu Ablageeinrichtungen und/oder Abwurfeinrichtungen für das Material M1-M3 führen. Die Verteileinheiten 22a-22c weisen steuerbare Sperrkörper auf, mittels welchen die Einleitung des auszubringenden Materials M1-M3 in die Ausbringleitung unterbrochen werden kann. Die Sperrkörper können bewegliche Klappen oder Wippen sein, mit welchen ein Durchgang zu den Ausbringleitungen gesperrt und freigegeben werden kann. Die Sperrkörper sind jeweils einer Ausbringleitung bzw. einem Materialauslass zugeordnet und können unabhängig voneinander gesteuert werden. Die Sperrkörper können mit einem Antrieb, beispielsweise einem elektromotorischen Antrieb gekoppelt sein, über welche die Sperrkörper zwischen einer Sperrstellung und einer Freigabestellung bewegbar sind.

Ferner können die Verteileinheiten 22a-22c mit Materialrückführungen ausgestattet sein, über welche Material M1-M3 aus der jeweiligen Verteileinheit 22a-22c in die mit der Verteileinheit 22a-22c verbundene Zuführleitung 16a-16c rückführbar ist. Die Materialrückführungen umfassen hierzu vorzugsweise Rückführleitungen, in welche das zurückzuführende Material M1-M3 zur Rückführung in die jeweilige Zuführleitung 16a-16c einleitbar ist.

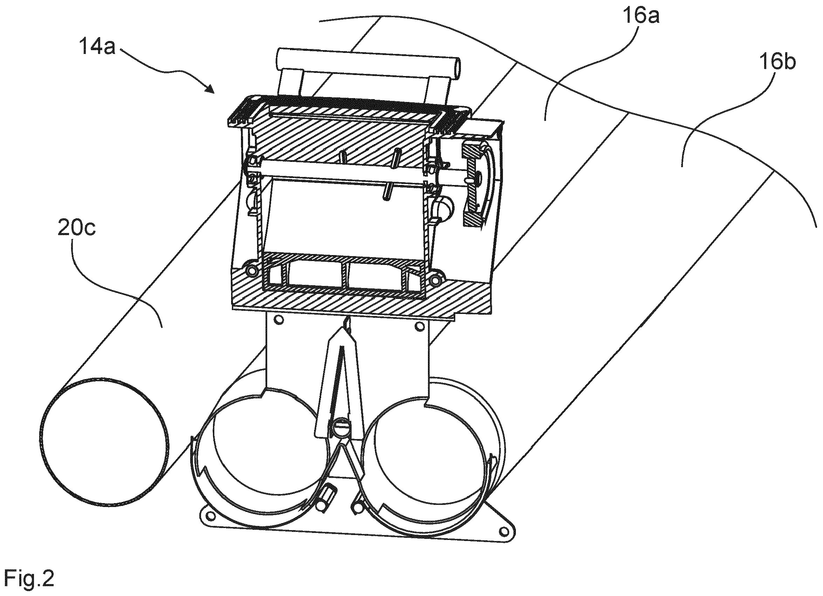

Die Fig. 2 zeigt die Einspeisevorrichtung 14a, über welche das Material M1 entweder nur in die Zuführleitung 16a, nur in die Zuführleitung 16b oder gleichzeitig in die Zuführleitungen 16a, 16b einspeisbar ist. Die Einspeisevorrichtung 14a kann also in verschiedene Betriebszustände verbracht werden, wobei in einem ersten Betriebszustand keine Materialeinspeisung erfolgt, in einem zweiten Betriebszustand Material M1 nur in die Zuführleitung 16a eingespeist wird, beim dritten Betriebszustand Material M1 nur in die Zuführleitung 16b eingespeist wird und in einem vierten Betriebszustand Material M1 gleichzeitig in die Zuführleitungen 16a, 16b eingespeist wird. Ferner kann die Einspeisemenge des in die Zuführleitung 16a, 16b eingespeisten Materials M1 über die Einspeisevorrichtung 14a eingestellt werden. Der Betriebszustand und die Einspeisemenge können dabei manuell oder motorisch eingestellt werden.

Die beiden weiteren in der Fig. 1 dargestellten Einspeisevorrichtungen 14b, 14c können in analoger Weise ausgebildet sein.

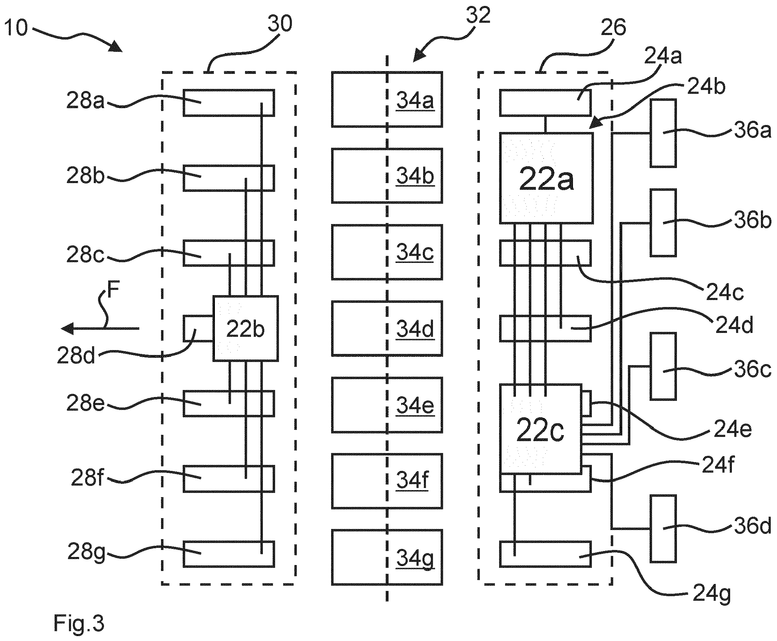

Die Fig. 3 zeigt schematisch die Ablageeinrichtungen 24a-24g, 28a-28g und die Prallteller-Abwurfeinrichtungen 36a-36d, mit welchen die Verteileinheiten 22a-22c verbunden sind.

Die Materialauslässe der Hauptverteileinheit 22a sind mit Ablageeinrichtungen 24a-24g eines ersten Typs verbunden. Die Ablageeinrichtungen 24a-24g des ersten Typs sind Saatgutablageeinrichtungen, nämlich Säschare. Die Materialauslässe der Nebenverteileinheit 22b sind mit Ablageeinrichtungen 28a-28g eines zweiten Typs verbunden. Die Ablageeinrichtungen 28a-28g des zweiten Typs sind Düngerablageeinrichtungen, nämlich Düngeschare. Die Ablageeinrichtungen 24a-24g des ersten Typs sind dazu eingerichtet, das Material M1-M3 in einer ersten Ablagetiefe auf den Boden der landwirtschaftlichen Nutzfläche abzulegen. Die Ablageeinrichtungen 28a-28g des zweiten Typs sind dazu eingerichtet, das Material M1, M2 in einer zweiten Ablagetiefe auf dem Boden der landwirtschaftlichen Nutzfläche abzulegen. Die erste Ablagetiefe und die zweite Ablagetiefe unterscheiden sich voneinander.

Die Materialauslässe der Nebenverteileinheit 22c sind mit Prallteller-Abwurfeinrichtungen 36a-36d verbunden. Die Prallteller-Abwurfeinrichtungen 36a-36d sind Saatgut-Prallteller, über welche Saatgut auf die Oberfläche der landwirtschaftlichen Nutzfläche geworfen werden kann.

Die Fig. 3 zeigt außerdem eine Rückverfestigungseinheit 32 der landwirtschaftlichen Ausbringmaschine. Die Rückverfestigungseinheit 32 dient zur Bodenrückverfestigung und ist als Reifenpacker mit einer Mehrzahl von quer zur Fahrtrichtung F nebeneinander angeordneten Reifen 34a-34g ausgebildet. Die Ablageeinrichtungen 24a-24g des ersten Typs sind innerhalb eines sich in Fahrtrichtung F hinter der Rückverfestigungseinheit 32 befindenden Ablagebereichs 26 der Ausbringmaschine angeordnet. Die Ablageeinrichtungen 28a-28g des zweiten Typs sind innerhalb eines sich in Fahrtrichtung F vor der Rückverfestigungseinheit 32 befindenden Ablagebereichs 30 der Ausbringmaschine angeordnet. Der Maschinenbediener kann somit unter Berücksichtigung der Bodenverhältnisse wählen, ob das auszubringende Material, beispielsweise Dünger oder Saatgut, in dem in Fahrtrichtung F vor der Rückverfestigungseinheit 32 befindenden Ablagebereich 30 oder in dem in Fahrtrichtung F hinter der Rückverfestigungseinheit 32 befindenden Ablagebereich 26 abgelegt werden soll. Bei Nässe kann das Saatgut beispielsweise hinter dem Reifenpacker 32 ausgebracht werden, damit die Pflanzen nicht durch einen verdichteten Bodenhorizont wachsen müssen.

Bezugszeichen
- 10: Materialverteilsystem
- 12a-12c: Vorratsbehälter
- 14a-14c: Einspeisevorrichtungen
- 16a-16c: Zuführleitungen
- 18: Strömungserzeuger
- 20a-20c: Förderluftleitungen
- 22a-22c: Verteileinheiten
- 24a-24g: Ablageeinrichtungen
- 26: Ablagebereich
- 28a-28g: Ablageeinrichtungen
- 30: Ablagebereich
- 32: Rückverfestigungseinheit
- 34a-34g: Reifen
- 36a-36d: Prallteller-Abwurfeinrichtungen

- M1-M3: Material
- F: Fahrtrichtung

## Patentansprüche

1. Materialverteilsystem (10) für eine landwirtschaftliche Ausbringmaschine, mit
- drei Verteileinheiten (22a-22c), welche jeweils einen Materialeinlass und mehrere Materialauslässe umfassen, und
- drei Zuführleitungen (16a-16c), wobei jede der Zuführleitungen (16a-16c) jeweils mit einem Materialeinlass einer Verteileinheit (22a-22c) verbunden ist;
**gekennzeichnet durch** drei Einspeisevorrichtungen (14a-14c), über welche jeweils ein auszubringendes Material (M1-M3) in bis zu zwei Zuführleitungen (16a-16c) einspeisbar ist.

2. Materialverteilsystem (10) nach Anspruch 1,
**dadurch gekennzeichnet, dass** eine Verteileinheit (22a) als Hauptverteileinheit und zwei Verteileinheiten (22b, 22c) jeweils als Nebenverteileinheit ausgebildet sind, wobei die Hauptverteileinheit (22a) vorzugsweise eine höhere Anzahl von Materialauslässen aufweist als die Nebenverteileinheiten (22b, 22c).

3. Materialverteilsystem (10) nach Anspruch 2,
**dadurch gekennzeichnet, dass** der durchschnittliche Förderquerschnitt der mit dem Materialeinlass der Hauptverteileinheit (22a) verbundenen Zuführleitung (16a) größer ist als die durchschnittlichen Förderquerschnitte der mit den Materialeinlässen der Nebenverteileinheiten (22b, 22c) verbundenen Zuführleitungen (16b, 16c).

4. Materialverteilsystem (10) nach Anspruch 2 oder 3,
**dadurch gekennzeichnet, dass** über die drei Einspeisevorrichtungen (14a-14c) jeweils Material (M1-M3) in die mit dem Materialeinlass der Hauptverteileinheit (22a) verbundenen Zuführleitung (16a) und in eine mit dem Materialeinlass einer Nebenverteileinheit (22b, 22c) verbundenen Zuführleitung (16b, 16c) einspeisbar ist.

5. Materialverteilsystem (10) nach einem der vorstehenden Ansprüche,
**gekennzeichnet durch** einen Strömungserzeuger (18), welcher mit den drei Zuführleitungen (16a-16c) verbunden und dazu eingerichtet ist, eine Förderluftströmung in den drei Zuführleitungen (16a-16c) zu erzeugen.

6. Materialverteilsystem (10) nach Anspruch 5,
**dadurch gekennzeichnet, dass** der Strömungserzeuger (18) über drei Förderluftleitungen (20a-20c) mit den Einspeisevorrichtungen (14a-14c) verbunden ist, wobei die Förderluftleitungen (20a-20c) übereinstimmende Luftförderquerschnitte aufweisen.

7. Materialverteilsystem (10) nach einem der vorstehenden Ansprüche, **dadurch gekennzeichnet, dass** mehrere oder sämtliche Materialauslässe der Verteileinheiten (22a-22c) mit Ausbringleitungen verbunden sind, wobei eine, mehrere oder sämtliche Verteileinheiten (22a-22c) vorzugsweise steuerbare Sperrkörper aufweisen, mittels welchen die Einleitung des auszubringenden Materials (M1-M3) in die Ausbringleitungen unterbrochen werden kann.

8. Materialverteilsystem (10) nach Anspruch 7,
**dadurch gekennzeichnet, dass** eine, mehrere oder sämtliche Verteileinheiten (22a-22c) Materialrückführungen aufweisen, über welche Material (M1-M3) aus der jeweiligen Verteileinheit (22a-22c) in die mit der Verteileinheit (22a-22c) verbundene Zuführleitung (16a-16c) rückführbar ist.

9. Materialverteilsystem (10) nach einem der vorstehenden Ansprüche, **gekennzeichnet durch** zumindest drei Vorratsbehälter (12a-12c) für auszubringendes Material (M1-M3), wobei jeder Vorratsbehälter (12a-12c) mit einer Einspeisevorrichtung (14a-14c) verbunden.

10. Materialverteilsystem (10) nach einem der vorstehenden Ansprüche, **dadurch gekennzeichnet, dass** die Materialauslässe einer ersten Verteileinheit (22a) mit Ablageeinrichtungen (24a-24g) eines ersten Typs verbunden sind.

11. Materialverteilsystem (10) nach einem der vorstehenden Ansprüche, **dadurch gekennzeichnet, dass** die Materialauslässe einer zweiten Verteileinheit (22b) mit Ablageeinrichtungen (28a-28g) eines zweiten Typs verbunden sind.

12. Materialverteilsystem (10) nach einem der vorstehenden Ansprüche, **dadurch gekennzeichnet, dass** die Materialauslässe einer dritten Verteileinheit (22c) mit
- Prallteller-Abwurfeinrichtungen (36a-36d) verbunden sind, oder
- den Ablageeinrichtungen (24a-24g) des ersten Typs verbunden sind, mit welchen auch die Materialauslässe der ersten Verteileinheit (22a) verbunden sind.

13. Landwirtschaftliche Ausbringmaschine, mit
- einem Materialverteilsystem (10) zum Verteilen des auszubringenden
Materials (M1-M3);
**dadurch gekennzeichnet, dass** das Materialverteilsystem (10) nach einem der vorstehenden Ansprüche ausgebildet ist.

14. Landwirtschaftliche Ausbringmaschine nach Anspruch 13,
**gekennzeichnet durch** eine Rückverfestigungseinheit (32) zur Bodenrückverfestigung, wobei
- die Ablageeinrichtungen (24a-24g) des ersten Typs innerhalb eines sich in Fahrtrichtung (F) hinter der Rückverfestigungseinheit (32) befindenden Ablagebereichs (26) der Ausbringmaschine angeordnet sind, und/oder
- die Ablageeinrichtungen (28a-28g) des zweiten Typs innerhalb eines sich in Fahrtrichtung (F) vor der Rückverfestigungseinheit (32) befindenden Ablagebereichs (30) der Ausbringmaschine angeordnet sind.
